# EUROPEAN PATENT APPLICATION

(11) **EP 1 577 139 A2**
(43) Date of publication of application: **21.09.2005**
(21) Application number: 05005204.2
(22) Date of filing: 10.03.2005
(51) Int. Cl.: B60K 6/04, B60K 17/22

(54) **Hybrid vehicle with power assisted prop shaft**

(30) Priority: 19.03.2004 US 805498
(71) Applicant: American Axle & Manufacturing, Inc., Detroit, MI 48211-1198 (US)
(72) Inventor: Gilmore, Curt D., Fenton Michigan 48430 (US); York, Todd M., Howell Michigan 48843 (US)
(74) Representative: Kraenzmer, Martin

(57) **Abstract**

A vehicle having a prop shaft with a shaft assembly (20), a stator (28b) and a rotor (28a). The shaft assembly includes a shaft structure and first and second universal joints (104) that are coupled to the opposite ends of the shaft structure. The stator is fixed for rotation with the shaft structure. The rotor may be mounted on the shaft structure. A hybrid vehicle, a hybrid vehicle kit and a method for converting a conventional vehicle into a hybrid vehicle are also provided.

## Description

### FIELD OF THE INVENTION

The present invention generally relates to hybrid vehicles. In particular, the present invention relates to a hybrid vehicle having a power assisted prop shaft.

### BACKGROUND OF THE INVENTION

Hybrid vehicles are becoming increasingly popular. Hybrid vehicles combine two or more power sources to propel the vehicle. For example, a parallel hybrid vehicle can be propelled by both a combustion engine and an electric motor. A fuel tank supplies gasoline to the combustion engine and batteries supply power to the electric motor. Both the engine and the electric motor can drive the transmission at the same time. The transmission drives the wheels via a prop shaft.

Automobile manufacturers and suppliers are actively working to develop improved powertrain and drivetrain systems for hybrid motor vehicles. While current hybrid vehicle powertrain and drivetrain systems are adequate for their intended uses, they are subject to improvement. Accordingly, there remains a need in the art for an improved hybrid vehicle system.

### SUMMARY OF THE INVENTION

In one form, the present teachings provide hybrid motor vehicle with a power train, an axle assembly, a prop shaft and an electric motor. The prop shaft is disposed between the power train and the axle assembly and configured to transmit rotary power to the axle assembly. The electric motor has a rotor that is mounted on the prop shaft. The power train and the electric motor are operable in a first mode in which the power train supplies rotary power to the prop shaft and the electric motor generates electrical energy. The power train and the electric motor are also operable in a second mode in which the electric motor supplies rotary power to the prop shaft.

In another form, the present teachings provide a vehicle prop shaft with a shaft assembly and an electric motor. The shaft assembly includes a shaft structure and first and second universal joints that are coupled to the opposite ends of the shaft structure. The electric motor includes a stator, which is fixed for rotation with the shaft structure, and a rotor, which is mounted on the shaft structure and surrounds at least a portion of the stator

In another form, the present teachings provide a hybrid vehicle kit for converting a conventional motor vehicle, which includes a power train, an axle assembly and a conventional prop shaft that facilitates the transmission of rotary power from the power train to the axle assembly, into a hybrid vehicle. The hybrid vehicle kit includes a hybrid prop shaft, an energy storage device and a controller. The hybrid prop shaft is configured to replace the conventional prop shaft and has a shaft assembly and an electric motor that includes a stator and a rotor. The shaft assembly includes a shaft structure and first and second universal joints that are coupled to the opposite ends of the shaft structure. The stator is fixed for rotation with the shaft structure while the rotor is mounted on the shaft structure and surrounds at least a portion of the stator. The energy storage device is electrically coupled to the electric motor and operable in a first mode, which supplies electric power to the electric motor, and a second mode, in which the energy storage device receives electric power from the electric motor. The controller selectively operates the energy storage device in the first and second modes

In yet another form, the present teachings provide a method for converting a conventional motor vehicle to a hybrid motor vehicle. The method includes removing a conventional prop shaft from the conventional motor vehicle and replacing the conventional prop shaft with a hybrid prop shaft having a shaft assembly and an electric motor with a stator and a rotor, the shaft assembly including a shaft structure and first and second universal joints coupled to the opposite ends of the shaft structure, the stator being fixed for rotation with the shaft structure and the rotor being mounted on the shaft structure and surrounding at least a portion of the stator

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a schematic illustration of an exemplary vehicle constructed in accordance with the teachings of the present invention;

Figure 2 is schematic illustration of a portion of the vehicle of Figure 1 illustrating the motor in partial section; and

Figure 3 is a sectional view of the motor taken in a direction that is transverse to a longitudinal axis of the motor.

### DETAILED DESCRIPTION OF THE PREFERRED EMBODIMENTS

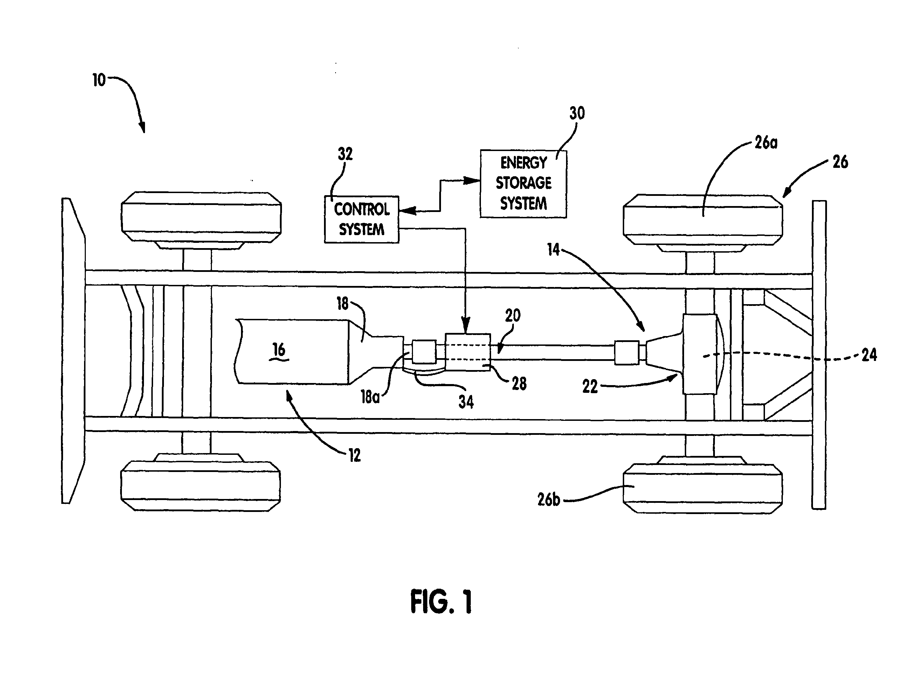

With reference to Figure 1 of the drawings, a hybrid vehicle constructed in accordance with the teachings of the present invention is generally indicated by reference numeral 10. While the vehicle 10 is illustrated as a rear-wheel drive vehicle, the vehicle 10 can also be a front-wheel drive vehicle or a four-wheel drive vehicle. The vehicle 10 may include a power train 12 and a drive train 14. The power train 12 may include an engine 16 and a transmission 18, while the driveline 14 may include a prop shaft assembly 20 and an axle assembly 22, which includes a differential 24 that is operable for directing power to a pair of rear wheels 26. The engine 16 may be operated so as to provide a rotary input to an input of the transmission 16. The transmission 16 may include an output 18a and a gear reduction unit that is operable for coupling the transmission input to the transmission output at a predetermined gear speed ratio. The prop shaft assembly 20 is coupled for rotation with the output 18a of the transmission 18. Drive torque is transmitted through the prop shaft assembly 20 to the rear axle 22 where it is apportioned to the left and right rear wheels 26a and 26b respectively by the differential assembly 24.

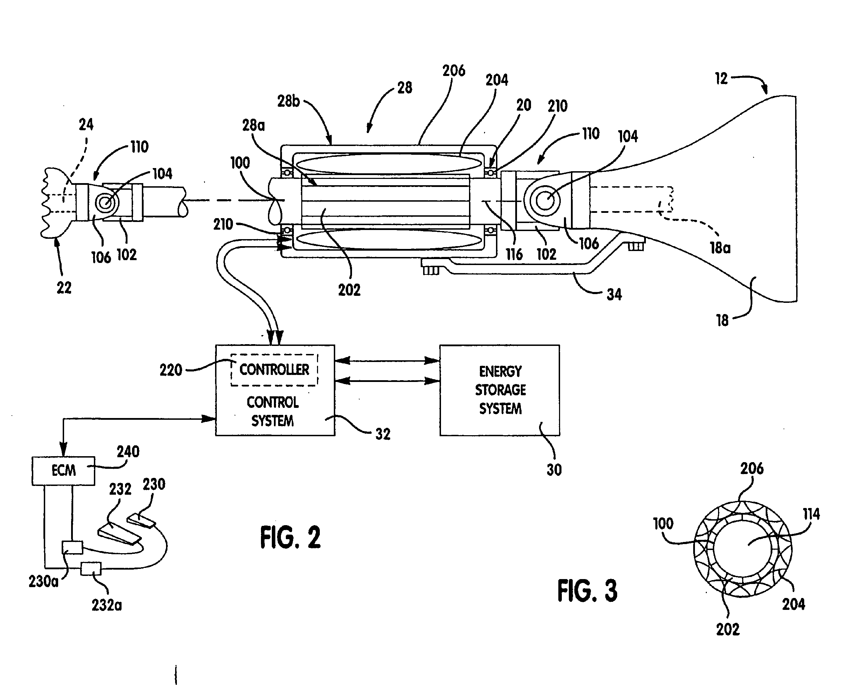

With additional reference to Figure 2, the prop shaft assembly 20 may include a shaft structure 100, a pair of universal joints 110, an electric motor 28, an energy storage system 30 and a control system 32. The universal joints 110 may conventionally include a trunnion cap 102, a spider 104 and a yoke 106. Each trunnion cap 102 may be fixedly coupled to an associated end of the shaft structure 100, typically via a weld. The spiders 104 may couple a respective one of the yokes 106 to a respective one of the trunnion caps 102. The universal joints 110 facilitate a predetermined degree of vertical and/or horizontal offset between the transmission output shaft 18a and the differential assembly 24.

With additional reference to Figure 3, the shaft structure 100 may be generally cylindrical, as illustrated, having a hollow central cavity 114 and a longitudinal axis 116. In the particular embodiment illustrated, the ends of the shaft structure 100 are shown to have been similarly formed in a rotary swaging operation such that they are necked down somewhat relative to a central portion. The shaft structure 100 may be formed from a welded seamless material, such as aluminum (e.g. 6061-T6 conforming to ASTM B-210) or steel.

In the particular example provided, the motor 28 is a brushless, slottless, permanent magnet DC motor so as to provide a relatively high power-to-weight ratio and minimize eddy current heating of the motor 28. Those of ordinary skill in the art will appreciate from this disclosure, however, that other types of motors may be used in the alternative and as such, the particular type of motor that is discussed in this particular example is not intended to limit the scope of the invention in any manner.

With reference to Figures 2 through 4, the motor 28 is illustrated to include a rotor 28a and a stator 28b. The rotor 28a may include a plurality of magnets 202, which may be coupled to the interior and/or exterior of the shaft structure 100, while the stator 28b may include a plurality of motor windings 204 that are housed in a hollow casing 206. The hollow casing 206 may be surround the magnets 202 and may be supported by the shaft structure 100 via a set of bearings 210. A bracket 34 may be employed to couple the casing 206 to another structure, such as the transmission 18 or the axle assembly 22 to thereby inhibit rotation of the casing 206 about the longitudinal axis 116 of the shaft structure 100. While the motor 28 may be located at any point along the shaft structure 100, placement of the motor 28 at a location proximate the transmission 18 is advantageous in that it lessens the impact that the weight of the motor 28 has on the vehicle's ratio of sprung mass to un-sprung mass.

The energy storage system 30 is electrically coupled to the motor 28 and may comprise any appropriate storage devices for storing electrical energy, including batteries, super capacitors and combinations thereof.

The control system 32 may include a controller 220 that may be coupled to motor 28 and the energy storage system 30. Optionally, the control system 32 may include a plurality of sensors that are distributed throughout the vehicle 10 (Fig. 1) for monitoring various vehicle characteristics, such as the speed of the vehicle, etc. A non-limiting example of the various characteristics of the vehicle that may be employed to control the motor 28 include a rotational speed of the engine 16 (Fig. 1), a speed of the vehicle, a position of a vehicle brake pedal 230, a position of a vehicle accelerator pedal 232, a torque output of the transmission 18, and/or an angular velocity of the shaft structure 100. Additionally or alternatively, the controller 220 may be responsive to a set of manually actuated controls that may be operated by the vehicle operator to selectively control the operation of the motor 28.

In the particular example provided, the controller 220 is coupled to a vehicle electronic control module 240, which may permit the controller 220 and the electronic control module 240 to transmit information and/or commands from one to the other. Accordingly, the controller 220 may receive a brake pedal signal that is generated by a brake pedal sensor 230a in response to a position of the vehicle brake pedal 230 and an accelerator pedal signal that is generated by an accelerator pedal sensor 232a in response to a position of the vehicle accelerator pedal 232.

The vehicle may be operated in a first mode, wherein the power train 12 provides rotary power that is transmitted through the prop shaft assembly 20 to the rear axle 22. Since the rotor 28a rotates with the shaft structure 100 as the vehicle is being operated, an electric current is induced in the stator 28b that may be employed to charge the energy storage system 30.

The vehicle may also be operated in a second mode in which energy that is stored in the energy storage system 30 is employed to power the motor 28 so that the motor 28 is employed to rotate the shaft structure 100. In this regard, rotary power provided by the motor 28 may take the place of the rotary power that is provided by the power train 12 or may be employed to supplement the rotary power that is provided by the power train 12. The control system 32 may be configured to operate the motor 28 to produce rotary power in situations that require rapid acceleration, the engine 16 (Fig. 1) to operate at an approximately constant rotational speed and/or near zero-speed operation of the vehicle.

With regard to a situation that requires rapid acceleration, upon receipt of an accelerator pedal signal that indicates that the accelerator pedal has been significantly depressed at a relatively fast rate, the controller 220 may control the energy storage system 30 to release electrical energy so that the motor 28 may be operated to augment the torque that is output from the power train 12. Similarly, in situations where it is desirable to operate the engine 16 (Fig. 1) at an approximately constant rotational speed (e.g., when a vehicle cruise control feature has been activated while the vehicle is operated on a highway), the controller 220 may be employed to may control the energy storage system 30 to release electrical energy so that the motor 28 may be operated to augment the torque that is output from the power train 12.

With regard to near zero-speed operation of the vehicle, the controller 220 and the electronic control module 240 may communicate such that the engine 16 (Fig. 1) is operated in a condition wherein the power train 12 does not provide rotary power to the prop shaft assembly 20 (i.e., the engine 16 (Fig. 1) may be placed in an idling condition or a non-operating condition) and the controller 220 may control the energy storage system 30 to release electrical energy (e.g., in response to the operator's actuation of the accelerator pedal 232) so that the motor 28 may be operated to supply drive torque to the shaft structure 100.

The control system 32 may be configured to operate the motor 28 as a generator despite the operation of the vehicle in the second mode any time that the brake pedal 230 is depressed. Operation of the motor 28 in this manner applies a force to the shaft structure 100 that tends to resist its rotation.

Optionally the vehicle may be operated in a third mode in which the motor 28 resists the rotation of the shaft structure 100. This mode may be employed, for example, when the controller 220 receives a brake pedal signal that indicates that the brake pedal has been significantly depressed at a relatively fast rate. The control system 32 may cause the motor 28 to resist the rotation of the shaft structure 100 by releasing energy that is stored in the energy storage system 30 is employed to power the motor 28 in a direction that is opposite the rotation of the shaft structure 100. Alternatively, the control system 32 may employ a relatively large electrical load to slow the rotation of the rotor 28a relative to the stator 28b when the motor 28 is employed to generate electrical energy.

The configuration of the prop shaft assembly 20 is advantageous in that it may be readily packaged into a vehicle. Additionally, the prop shaft assembly 20 facilitates the ready conversion of a conventionally powered vehicle with a conventional prop shaft to a hybrid vehicle. In this regard, the conventional prop shaft assembly of a conventional vehicle may be removed and replaced with a prop shaft assembly 20 constructed in accordance with the teachings of the present invention.

While the invention has been described in the specification and illustrated in the drawings with reference to a specific embodiment, it will be understood by those skilled in the art that various changes may be made and equivalents may be substituted for elements thereof without departing from the scope of the invention as defined in the claims. Furthermore, the mixing and matching of features, elements and/or functions between various embodiments is expressly contemplated herein so that one of ordinary skill in the art would appreciate from this disclosure that features, elements and/or functions of one embodiment may be incorporated into another embodiment as appropriate, unless described otherwise, above. Moreover, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the foregoing description and the appended claims.

## Claims

1. A hybrid motor vehicle comprising:
a power train;
an axle assembly;
a prop shaft disposed between the power train and the axle assembly, the prop shaft being configured to transmit rotary power to the axle assembly; and
an electric motor having a rotor that is mounted on the prop shaft;
wherein the power train and the electric motor are operable in a first mode in which the power train supplies rotary power to the prop shaft and the electric motor generates electrical energy and wherein the power train and the electric motor are operable in a second mode in which the electric motor supplies rotary power to the prop shaft.

2. The hybrid vehicle of Claim 2, wherein the rotor includes a plurality of magnets.

3. The hybrid vehicle of Claim 2, wherein the electric motor further comprises a stator having a plurality of wire coils, the stator being mounted about the rotor.

4. The hybrid vehicle of Claim 3, wherein a bearing set is employed to mount the stator to the prop shaft.

5. The hybrid vehicle of Claim 4, wherein the stator is coupled to at least one of the power train and the axle assembly to inhibit rotation of the stator.

6. The hybrid vehicle of Claim 1, wherein the power train and the electric motor are operable in a third mode in which the power train supplies rotary power to the prop shaft and the electric motor is employed to resist rotation of the prop shaft.

7. The hybrid vehicle of Claim 1, further comprising an energy storage device that is electrically coupled to the electric motor, the energy storage device being operable in a first mode, which supplies electric power to the electric motor, and a second mode, in which the energy storage device receives electric power from the electric motor.

8. The hybrid vehicle of Claim 7, wherein the energy storage device includes at least one of a battery and a super capacitor.

9. The hybrid vehicle of Claim 7, further comprising a controller for selectively operating the power train and the electric motor in the first and second modes.

10. The hybrid vehicle of Claim 9, further comprising an accelerator pedal sensor and a brake pedal sensor, the accelerator pedal sensor being adapted to sense a position of an accelerator pedal and generate an accelerator pedal signal in response thereto, the brake pedal sensor being adapted to sense a position of a brake pedal and generate a brake pedal signal in response thereto, the controller receiving the accelerator pedal signal and the brake pedal signal and selectively operating the electric motor and the energy storage device in response thereto.

11. A vehicle prop shaft comprising:
a shaft assembly with a shaft structure and first and second universal joints coupled to the opposite ends of the shaft structure; and
an electric motor with a stator and a rotor, the stator being fixed for rotation with the shaft structure and the rotor being mounted on the shaft structure and surrounding at least a portion of the stator.

12. The vehicle prop shaft of Claim 11, wherein a set of bearings are disposed between the shaft structure and the stator, the set of bearings permitting the shaft structure to support and rotate independently of the stator.

13. The vehicle prop shaft of Claim 11, further comprising an energy storage device that is electrically coupled to the electric motor, the energy storage device being operable in a first mode, which supplies electric power to the electric motor, and a second mode, in which the energy storage device receives electric power from the electric motor.

14. The vehicle prop shaft of claim 13, wherein the energy storage device includes at least one of a battery and a super capacitor.

15. A hybrid vehicle kit for converting a conventional motor vehicle into a hybrid vehicle, the conventional motor vehicle including a power train, an axle assembly, and a conventional prop shaft that facilitates the transmission of rotary power from the power train to the axle assembly, the hybrid vehicle kit comprising:
a hybrid prop shaft that is adapted to replace the conventional prop shaft, the hybrid prop shaft having a shaft assembly and an electric motor that includes a stator and a rotor, the shaft assembly including a shaft structure and first and second universal joints coupled to the opposite ends of the shaft structure, the stator being fixed for rotation with the shaft structure and the rotor being mounted on the shaft structure and surrounding at least a portion of the stator;
an energy storage device that is electrically coupled to the electric motor, the energy storage device being operable in a first mode, which supplies electric power to the electric motor, and a second mode, in which the energy storage device receives electric power from the electric motor; and
a controller for selectively operating the energy storage device in the first and second modes.

16. The hybrid vehicle kit of Claim 15, further comprising an accelerator pedal sensor that is adapted to sense a position of an accelerator pedal and generate an accelerator pedal signal in response thereto, the controller receiving the accelerator pedal signal and selectively operating the energy storage device in response thereto.

17. The hybrid vehicle kit of Claim 16, further comprising a brake pedal sensor, the brake pedal sensor being adapted to sense a position of a brake pedal and generate a brake pedal signal in response thereto, the controller receiving the brake pedal signal and selectively operating the energy storage device in response thereto.

18. A method for converting a conventional motor vehicle to a hybrid motor vehicle comprising:
removing a conventional prop shaft from the conventional motor vehicle; and
replacing the conventional prop shaft with a hybrid prop shaft having a shaft assembly and an electric motor with a stator and a rotor, the shaft assembly including a shaft structure and first and second universal joints coupled to the opposite ends of the shaft structure, the stator being fixed for rotation with the shaft structure and the rotor being mounted on the shaft structure and surrounding at least a portion of the stator.
